(19) Europäisches Patentamt
European Patent Office
Office européen des brevets

(11) **EP 3 364 615 B1**

(12) **EUROPEAN PATENT SPECIFICATION**

(45) Date of publication and mention
of the grant of the patent:
**27.07.2022 Bulletin 2022/30**

(51) International Patent Classification (IPC):
**H04L 47/32** *(2022.01)*  **H04L 47/2416** *(2022.01)*
**H04W 28/02** *(2009.01)*  *G10L 25/78* *(2013.01)*

(21) Application number: **17156745.6**

(22) Date of filing: **17.02.2017**

(52) Cooperative Patent Classification (CPC):
**H04L 47/32; H04L 47/2416; H04W 28/02;**
G10L 25/78

(54) **DEVICE AND METHOD FOR FORWARDING OR ROUTING SPEECH FRAMES IN A TRANSPORT NETWORK OF A MOBILE COMMUNICATIONS SYSTEM**

VORRICHTUNG UND METHODE ZUR WEITERLEITUNG ODER ZUR WEGFINDUNG VON SPRACHRAHMEN IN EINEM TRANSPORTNETZ EINES MOBILKOMMUNIKATIONSSYSTEMS

APPAREIL ET PROCÉDÉ POUR TRANSFÉRER OU ROUTER DES TRAMES VOCALES DANS UN RÉSEAU DE TRANSPORT D'UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.08.2018 Bulletin 2018/34**

(73) Proprietor: **Telefónica Germany GmbH & Co. OHG
80992 München (DE)**

(72) Inventors:
• **Müllner, Robert
81479 München (DE)**
• **Schmidt, Holger
41844 Wegberg (DE)**

• **Leth-Espensen, Mads
82110 Germering (DE)**
• **Widder, Dr. Wolfgang
82362 Weilheim (DE)**

(74) Representative: **Herrmann, Uwe et al
Lorenz Seidler Gossel
Rechtsanwälte Patentanwälte
Partnerschaft mbB
Widenmayerstraße 23
80538 München (DE)**

(56) References cited:
**EP-A2- 1 903 557   US-A1- 2008 151 921
US-A1- 2008 255 842**

**Description**

The present invention relates to a device and a method for forwarding or routing speech frames in a transport network of a mobile communications system.

In mobile networks more and more interfaces are realised as Internet Protocol (IP) interfaces with the aim to operate an all-IP based transport network instead of several heterogeneous transport networks for the various technologies. An IP-based transport network can be dimensioned smaller than the maximum capacity that has to be provided for comparable Circuit-Switched (CS) networks.

The burst traffic type in today's mobile networks executed by many users in parallel allows in the time domain a smooth distribution of the data to be transmitted. Resources currently not occupied by one user can be distributed among other users and an efficient utilisation of the deployed network capacity is possible also in case of temporary traffic peaks. For handling severe overload situations, packets that cannot be scheduled due to resource bottlenecks are temporarily buffered and will be discarded, i.e. deleted, after expiry of a discard timer. In overloaded IP networks this effect is perceived by slurring syllables, i.e. conversations in which syllables or even entire words are missing or have been clipped.

A high packet loss rate or packet discard due to jitter can lead to so-called "robotic voice". The packet loss concealment algorithms are stable to handle occasional packet losses in unvoiced speech segments. If the loss rate is high, especially when subsequent speech frames in voiced speech segments are lost, the gain provided by error concealment is limited. This can lead to robotic sounding speech.

US 2008/0151921 A1, US 2008/0255842 A1 and EP 1 903 557 A2 propose discarding speech frames based on an indicator regarding activity of speech within investigated speech frames. In particular, the teaching of these documents suggests discarding speech frames containing a silent period since those frames are considered to be less important for speech transmission between two mobile terminals.

It is an object of the present invention to overcome the above-mentioned drawbacks by means of a device having all features of claim 1 or by using a method according to claim 18. Further, according to the invention, it is advantageous to use a device having the features of claim 1 in a transport network of a mobile communications system or IP-based fixed network.

According to the invention, a device for forwarding or routing speech frames in a transport network of a mobile communications system is proposed, having a buffer for storing incoming speech frames of a plurality of users of the mobile communications system, and a discarding unit for discarding speech frames. The discarding unit is adapted to discard a speech frame stored in the buffer on basis of content of the speech frame.

Discarding of speech frames in the transport network is done in state of the art technologies without taking notice of the contents of the frame. The present invention is able to perform selective discarding of speech frames, wherein those frames are selected for discarding, that have been received erroneously, or additionally refer to silent periods during a conversation.

Discarding with preference those speech frames allows to mitigate a potential overload situation and thus enables the transport of other speech frames with more valuable speech information. The intention of this invention is to add intelligence to nodes of the transport network, e.g. routers. The resulting situation can be compared to a conveyor belt that transports apples. Instead of opening an outlet when an overload situation is reached, the machine proactively sorts out bad fruit to avoid overload situations in which also good fruit is discarded.

Selective discarding in this invention is proposed to be done out of a plurality of speech frames of all users being buffered in a transport node (e.g. equals the device of claim 1) thus providing a large pool of potential frames to be discarded. The node acts in accordance with a procedure that can be considered as a filter in which during overload situations only valuable speech frames pass through and not-valuable speech frames are discarded. Consequently the discarded speech frames do not occupy transmission resources, which can now be used for the transport of more valuable speech frames of this or other users. The benefit is improved speech quality in overload situations for traffic that is routed via IP-based transport networks.

According to the invention, the content of the speech frame comprises information about the quality of said speech frame and optionally the presence or absence of active speech transmitted by said speech frame. The discarding unit is adapted to evaluate the content of a speech frame and to discard a speech frame on basis of this evaluation.

The term quality refers to the receive quality for the transmission of the speech frame via the air interface. If the speech frame, sent from a mobile terminal in uplink direction to the base station, has been erroneously received, i.e. bit errors of the most relevant bits of the encoded speech have been detected during the channel decoding process, this frame is marked in state of the art 3GPP technologies by its Frame Quality Indicator (FQI) as a "bad frame / corrupted frame". The most relevant bits of a speech frame are redundantly transmitted via the air interface and protected by a cyclic redundancy check for error detection. The information about erroneously received speech frames is passed in state of the art 3GPP technologies to the error concealment unit and it is the task of the error concealment to decide how to deal with erroneous speech frames. Error concealment is executed at the receiving side, which is the remote terminal in case of a Transcoder Free Operation (TrFO) / Tandem Free Operation (TFO) connection or in tandeming mode the Transcoder and Rate Adaptation Unit (TRAU) of the Global System for Mobile Communications (GSM) or the transcoding unit in the Media Gateway (MGW) of the Universal Mobile Telecommunications System (UMTS), respectively.

By this, the decision made by the discarding unit whether a speech frame is to be discarded is made on basis of the quality of said speech frame and optionally upon the presence of active speech transmitted by said speech frame. Erroneous speech frames and optionally speech frames containing a silent period are more likely to be discarded. These frames are considered to be less important with regard to speech quality of a conversation that a selective discarding of such frames would be beneficial with respect to the overall quality of all conversations routed via the transport node in the transport network in highly loaded situations.

Preferably, the discarding unit is adapted to discard a speech frame on basis of its status of the FQI-flag indicating the quality of said speech frame, and/or a Voice Activity Detection (VAD) flag indicating the presence of active speech of said speech frame.

Further, the device can be adapted to receive and to output speech frames in the form of IP-packets. IP-networks are the most common type of transport networks for mobile communications systems.

The transport network is the part of the mobile communications system not involved in speech and channel coding.

According to one preferred embodiment of the invention, the transport network of the mobile communications system is the part between the two entities being in direct connection with the mobile terminals over an air interface.

A communication path is the link between two user terminals of the mobile communications system. The mobile communications system is established by the mobile network and the transport network.

Preferably, the device is a router, in particular a router that is connectable to the internet.

The mobile communications system is a GSM-system, a UMTS-system, a Long Term Evolution (LTE) system, a LTE Advanced (LTE-A), a fifth generation (5G) system and/or a combination thereof. Mobile communications systems are in general a combination of the mentioned system. In densely populated areas, the LTE/LTE-A/5G high-speed networks are already or will be deployed, whereas poorly populated areas are commonly supplied by UMTS or GSM-systems.

Further, the discarding unit is adapted to discard a speech frame on basis of the time passed since receiving said speech frame, and preferably, the speech frame is discarded upon expiration of a discard timer. Besides the factors of quality of the speech frame and active speech transmitted via said speech frame, the time passed since receiving the speech frame can be considered when determining whether a specific speech frame is to be discarded or not.

According to an advantageous version of the invention, the discarding unit is further adapted to discard speech frames upon reaching a first threshold indicating an overload situation of the device, preferably, the overload situation being defined when, over a certain period of time, the amount of incoming speech frames is larger than the maximum amount of speech frames that can be forwarded or routed by the device.

Further, the discard unit is further adapted to stop discarding of speech frames upon the device falling short of a second threshold indicating a load situation below the first threshold.

Preferably, the discarding unit is further adapted to discard a speech frame when a threshold is reached, preferably the threshold being (a) an absolute load value of the device, (b) a relative load value of the device, (c) an absolute counter that is incremented with the number of currently buffered frames, (d) a relative value indicating the ratio of currently buffered frames and the total number of currently scheduled frames, and/or (e) another load related measure.

According to the invention, the discarding unit can be further adapted to select a speech frame to be discarded by executing a cost function taking into account the following parameters: (a) the time passed since receiving the speech frame, i.e. a Buffering Time Parameter, (b) the quality of the speech frame, i.e. a Quality Parameter, preferably on basis of a FQI-flag of the speech frame, and (c) the presence of silent phases in the speech frame, i.e. a Silence Parameter, preferably on basis of a VAD-flag of the speech frame.

In this case, the cost function can be based by multiplying respective weighting factors to each of the parameters, i.e. Weight Buffering Time, Weight Quality and Weight Silence.

The cost function can then be calculated by:

$$\{\text{Buffering Time Parameter} \cdot \text{Weight Buffering Time} + \text{Quality Parameter} \cdot \text{Weight Quality} + \text{Silence Parameter} \cdot \text{Weight Silence}\} / \{\text{Weight Buffering Time} + \text{Weight Quality} + \text{Weight Silence}\}.$$

It is beneficial if the frame in the buffer having the smallest value of the cost function is discarded by the discarding unit. A speech frame having a low value of the cost function is considered as less relevant for the conversation transmitted via the mobile communications system and is thus more likely to be discarded.

In one preferred version, the invention further comprises means for adding time sequence information to a speech frame to be forwarded or routed, wherein the means is adapted to add information comprising the number of frames that have been discarded in the corresponding stream of speech frames for a particular user.

However, the invention also encompasses that the discarding unit is further adapted to discard a speech frame stored in the buffer on basis of its relative position within a silence period transmitted by a plurality of speech frames of a stream of speech frames for a particular user, preferably wherein a speech frame at the beginning of said silence period is less likely to be discarded than a speech frame at a later instance of said silence period.

As a result, the position of a speech frame in a silent period of a conversation is a factor when establishing a discard decision. Thus, the discard unit is adapted to discard a speech frame on basis of the speech frame's position in a silent period of a conversation (=stream of speech frames).

The invention also refers to a method for forwarding or routing speech frames in a transport network of a mobile communications system, the method comprising the steps: receiving incoming speech frames of a plurality of users of the mobile communications system, storing the incoming speech frames of the plurality of users of the mobile communications system in a buffer, and discarding a speech frame of the speech frame stored in the buffer on basis of content of the speech frame. The content of the speech frame comprises information about the quality of said speech frame indicating whether the speech frame has been erroneously received in the uplink transmission of the mobile network air interface.

Further, a method for operating the device of anyone of the above-mentioned version lies within the claimed scope of protection.

Preferably, the method is performed by a transport node of the mobile communications system's transport network, preferably by a router in the internet.

It is further beneficial that the method is performed by all, plural or at least one transport node of the mobile communications system's transport network, preferably by all routers in the internet.

Selective discarding of speech frames is a new functionality. According to the state of the art, discarding of speech frames is done during overload situations if a discard timer expires, regardless of the quality of the frame. It is executed according to the following procedure.

After successful connection setup a dedicated channel is assigned to each user in CS networks. Dedicated channels are assigned on the air interface as well as on the terrestrial interfaces Abis, Ater, and A for GSM and Iub, Iu-CS and SS7 in UMTS, respectively. In GSM and UMTS networks, more and more CS interfaces are replaced by Packet-Switched (PS) transport systems with the aim to operate a single all-IP network instead of a mixture of CS and PS transport networks.

LTE and 5G networks are pure PS networks, i.e. no CS services are standardised and PS data are transferred via the air interface and via the transport network. The end-user services are also realised as pure PS services, e.g. as PS voice service also called Voice over IP (VoIP) / Voice over LTE (VoLTE) or as Message Session Relay Protocol (MSRP) based chat services replacing CS based Short Message Service (SMS).

PS networks provide a higher economic efficiency, as resources are shared between several users and are only occupied when data are available. In contrast, the dedicated transmission resource in CS networks is assigned to a single user and is occupied for the entire duration of the connection (speech call or data connection). In a speech call, the speech activity on each leg of a point-to-point conversation is typically around 50%, while the other 50% of the time is silence, in which one person listens to the words spoken by the other person. In 3rd Generation Partnership Project (3GPP) CS as well as in PS networks, speech is transmitted in speech frames of 20 ms length in general. A further subdivision of the bits contained in a speech frame is used for Layer 1 transmission via the air interface, using four Time Division Multiple Access (TDMA) frames in GSM networks or several Resource Blocks (RBs) in LTE. One RB represents the smallest scheduling unit consisting of 180 kHz bandwidth and a Transmission Time Interval (TTI) of 1 ms. The amount of RBs necessary to transmit the data of a 20 ms speech frame depends on the selected speech codec and applicable Modulation and Coding Scheme (MCS) according to the prevailing radio channel conditions. VAD [1] is used during speech encoding to differentiate between phases of active speech and silent phases. During silent phases, Discontinuous Transmission (DTX) can be used to save power and reduce interference on the air interface by reducing the amount of transmitted data when a user does not speak.

During DTX phases comfort noise [2] is generated at the receiving side to avoid unnatural sound impression for the listener when the speaker changes from an active speech phase with background noise to a silence phase. White noise is generated at the receiver side and combined with the spectral envelope from the sender side. The latter information is conveyed in Silence Descriptor (SID) frames, for which updates are transmitted every 8 frames [3] with a source codec bitrate of 1.8 kbps assuming that SID frames are continuously transmitted. The comfort noise generation process includes the evaluation of the acoustic background noise in the transmitter, the noise parameter encoding (SID frames) and decoding, and the generation of comfort noise in the receiver [4]. A switch back to transmitting each speech frame is done when the VAD recognises a transition from silence to active speech.

Transport networks are often based on a heterogeneous topology, including for example Time Division Multiplexing (TDM) on the Abis interface and an IP-based transport network for the A interface. For the lub interface, Asynchronous Transfer Mode (ATM) over Synchronous Digital Hierarchy (SDH) might be used, while an IP-based transport network is deployed between transport network concentrators. In TDM based transport networks, bit positions on the Pulse Code Modulation (PCM) connection are fixed allocated, regardless whether the carried traffic represents active speech or speech pauses. On the air interface DTX is used to reduce interference in the mobile network, this means that less bursts are transmitted during speech pauses. However, in parts of the transport network, e.g. using TDM or ATM over SDH, a fixed frame allocation is used also during speech pauses. In state of the art technologies, nodes of the transport network do not evaluate the VAD flag and traffic generated during speech pauses is also transported. In the present invention these frames are proposed to be discarded in overload situations.

More particularities, features and advantages of the invention become apparent by the following description of the figures. It shows:

Fig. 1: an example for a heterogeneous transport network configuration in 3GPP mobile networks,
Fig. 2: a mobile network topology in an IP transport network,
Fig.3: a depiction of the extension of the current state of technology and the evaluation of Frame Quality Indicator and Voice Activity Detection flag by all nodes for UMTS uplink traffic,
Fig. 4: a depiction of the evaluation of Frame Quality Indicator and Voice Activity Detection flag by all nodes for LTE downlink traffic,
Fig. 5: speech frames of a plurality of users buffered in a node of the transport network
Fig. 6: a table for illustrating a selection of the best suited speech frame for discarding, and
Fig. 7: a flow-chart explaining the process in the discarding unit.

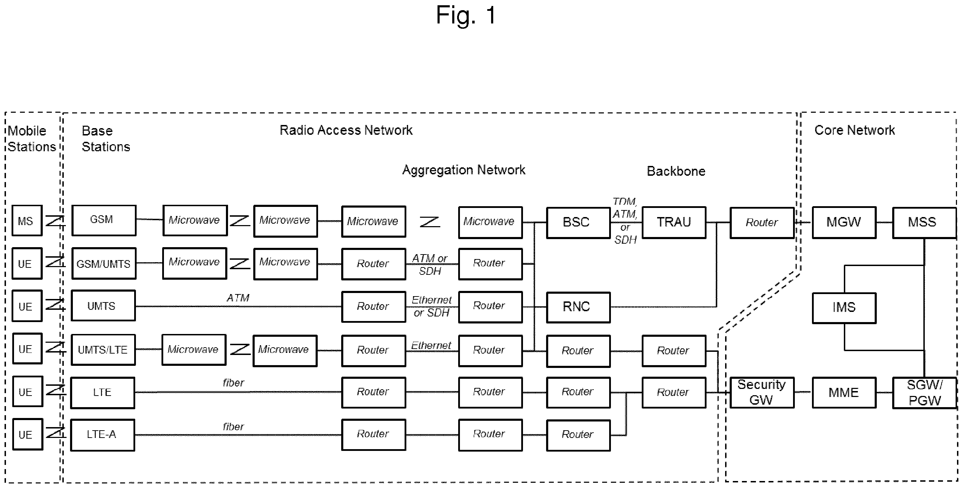

Fig. 1 shows an example for a heterogeneous transport network configuration in 3GPP mobile GSM, UMTS, LTE, and LTE-A networks. It covers the Radio Access Network with the Aggregation Network and Backbone as well as the Core Network.

The mobile terminals (Mobile Station, MS or User Equipment, UE) are connected via the GSM, UMTS or LTE/LTE-A air interface to the base station of the corresponding technology. Fig. 1 demonstrates an example, in which the GSM base station is connected via Microwave to the Base Station Controller (BSC). The Ater interface between the BSC and TRAU is realised via TDM, ATM or SDH. In another example Ethernet is used between two routers on the lub Interface for the connection of the UMTS base station (NodeB) to the Radio Network Controller (RNC). Typically Ethernet rings based on Microwave (SDH/Hybrid) are used in the Aggregation Network providing redundant transport ways. For the lu-CS interface between the RNC and the MGW / Mobile Switching Centre Server (MSS) several Control Planes and User Planes can be configured to provide redundancy. In case of loss of one path, the traffic can be routed via another path. Service is still provided but overload is likely. For high data rate LTE/LTE-A networks, IP/Multiprotocol Label Switching (MPLS) fiber access is frequently used in the Aggregation Network and Backbone.

In order to take economical benefit from PS data transmission, the capacity of the transport network is typically dimensioned smaller than the maximum necessary capacity. This is possible, because in the typical burst nature of Internet traffic, not all users transmit data at the same time and not all users are located at positions of ideal radio channel conditions, in which high throughput can be achieved on the air interface. Bandwidth savings are also exploited for speech services, in which resources not occupied during DTX phases are assigned to other users. Thus a lower dimensioning of the transport capacity becomes possible without significantly degrading user perception.

If, however, in IP networks the traffic load suddenly increases and not all frames can immediately be scheduled, some packets are transmitted with delay. According to the state of the art technology a Quality of Service (QoS) mechanism is used to prioritise packets of specific delay sensitive services, while services of less stringent delay requirements are buffered for a longer time. For VoIP/VoLTE a discard timer is used according to the state of the art, which can be configured based on a trade-off between quality and capacity. If the timer expires before the speech packet has been transmitted, the packet is discarded, because the speech call cannot be further delayed. A longer discard timer allows to overcome temporary overload situations by being able to buffer not immediately scheduled speech frames for a longer time without increasing the discard rate and thus to increase the amount of served users and finally the capacity of the network. On the other side, human perception is very sensitive for mouth to ear delays higher than 160 ms. User satisfaction for G.711 speech codec as a function of delay and packet loss rate is analysed in the ITU-T E-Model in ITU-T G.109 [5] and shown in Figure 1.4 of Amendment 1 [6]. According to the state of the art technology discarding of speech packets is executed to reduce abnormal load conditions and to maintain the sequence of speech frames. A reasonable setting for the discard timer is 100 ms [7].

According to the state of the art, information about silent phases and the quality of a speech frame is passed transparently through the transport network. It is evaluated by the speech decoder that is located in the remote terminal in case of using TrFO or in tandeming mode in the entities of the mobile network, the TRAU in GSM and the MGW in UMTS. Selective discarding based on the quality of the speech frame is not done in the nodes of the transport network. Only discarding of speech frames due to expiry of the discard timer is performed in the prior art.

The enhanced Multi-Level Precedence and Pre-emption (eMLPP) service allows pre-emption of CS users by other CS users of higher priority. For PS services the QoS attribute Allocation/Retention Priority (ARP) is used for pre-emption or downgrading of currently served users [8][9]. Both functionalities, eMLPP and ARP based QoS further separate between the pre-emption capability and pre-emption vulnerability. In both cases, services are pre-empted regardless of the contents or quality of the speech frame, i.e. a specific user is pre-empted according to the user's priority but not on basis of discarding useless or distorted speech frames of this user. Another means used in state of the art technologies is dropping users due to poor quality e.g. triggered by Radio Link Timeout. If the signalling messages cannot be decoded correctly within a specific period of time, the service of this user is dropped. Again, the whole service is dropped and this is the fundamental difference to the present invention. The latter proposes selective discarding of a part of the speech frames sent from or to a specific user without terminating the whole service.

The fundamental principle of this invention is selective discarding of speech frames by selecting (a) speech frames generated in silence phases, i.e. during non-active speech periods and (b) speech frames that have erroneously been received in the uplink transmission of the mobile network's air interface. The latter aspect covers speech frames for which a frame error (GSM) or block error (UMTS, LTE, LTE-A) has been detected during the channel decoding process. These speech frames are marked by the FQI as "Bad Frame" or "Corrupted Frame" [10] and this information is passed to the speech decoding entity (making use of state of the art indicators). The new aspect of this invention is that during congestion at any node or any interface, these frames shall be selected out of the plurality of buffered speech frames from all users and be discarded instead of waiting until good frames are discarded due to expiry of the discard timer.

General Process:

For this purpose the VAD flag of each speech frame indicating "presence of active speech = 1" or "absence of active speech = 0 (e.g. during DTX phase)" and the FQI [10] shall be evaluated by the nodes of the transport network. In the following description the VAD flag is used for differentiation between active speech and speech pauses. Any other indication representing these states could also be used by the procedure described in this invention, e.g. the VAD status information embedded into the SID frames and transferred to the speech decoder.

FQI represents any indicator for the quality of the uplink reception. Any other indicator can be used instead. The important aspect is that this indicator is passed to the speech decoding unit. Also an indicator offering more than two states can be used.

This invention distinguishes from state of the art technologies, because these indicators shall not only be evaluated by the speech decoding unit but by all network entities that are involved in the whole transmission chain, especially by Internet routers and other transport nodes. Note that for a mobile VoLTE (mVoLTE) call between two LTE subscribers, speech encoding and channel encoding is executed in the mobile terminal of the first user, UE 1, and speech is transmitted via the LTE air interface in uplink direction to the first evolved NodeB (eNodeB 1). Channel decoding is done at eNodeB 1 and block errors are identified during this channel decoding process, i.e. a speech frame is marked as "Bad Frame" or "Corrupted Frame" if one or several bits carrying important information for speech restoring have been received erroneously and correction was not possible. After eliminating the bits used for channel coding, the encoded speech together with the FQI information is sent to the eNodeB serving the second user (eNodeB 2) via the Aggregation Network, Backbone Network and Core Network. At eNodeB 2 a channel encoding process is executed for transmitting the encoded speech via the second air interface and protecting it against errors by adding redundancy. If despite forward error correction, the frame is not correctly received at UE 2, retransmissions might follow to increase the probability of correct reception. This procedure describes the state of the art.

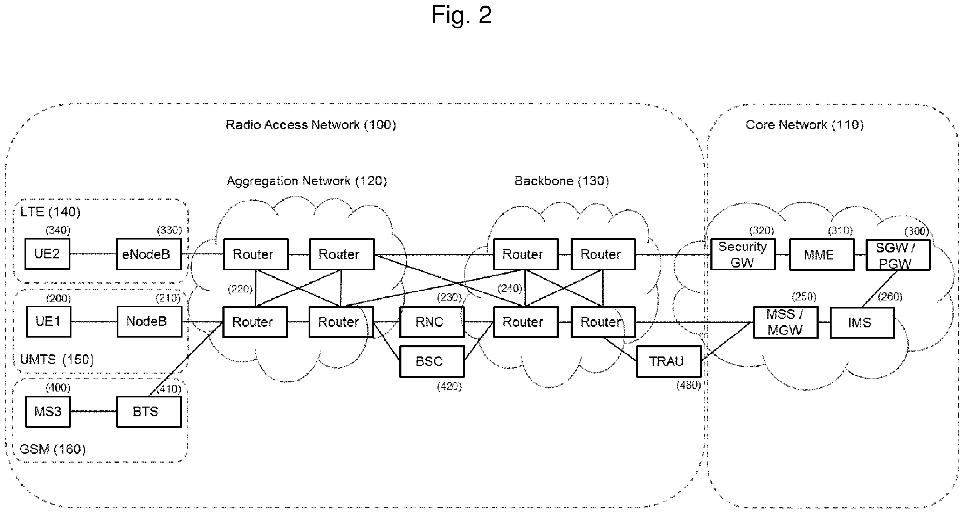

Fig. 2 shows an example for mobile networks according to the 3GPP standard, separated into the Radio Access Network (100) and the Core Network (110). The transport part of the Radio Access Network (100) includes the Aggregation Network (120) and the Backbone Network (130). Three different Radio Access Technologies are shown in Fig. 2, LTE (140), UMTS (150), and GSM (160).

In the following, a state of the art speech call scenario is considered. This mobile to mobile call is executed between one mobile subscriber located in a cell of the UMTS network (150) using a CS connection and a second subscriber located in a cell of the LTE network (140).

In the UMTS network (150) speech encoding is done in the UE of the first subscriber, UE1 (200). After the speech encoding process, channel encoding is done and the speech frames are transmitted from UE1 (200) via the UMTS air interface to the NodeB (210). In CS speech services only forward error correction is executed, i.e. no retransmissions are used on the air interface. The NodeB (210) performs channel decoding and identifies which speech frames have correctly been received, i.e. no block errors have occurred via transmission on the air interface, and marks erroneously received speech frames as "bad frame" in the FQI. The speech frames are passed via routers (220) in the Aggregation Network (120) to the Radio Network Controller (RNC, 230). From the RNC the speech frames are conveyed via routers (240) in the Backbone Network (130) to the MSS/MGW (250) in the Core Network (110). In this entity speech decoding for tandeming connections is done, i.e. for connections that do not use TrFO. The FQI is evaluated and it is the decision of the Error Concealment procedure how to proceed with erroneous speech frames. The standard approach is to discard the erroneous speech frame during speech decoding process and to copy the preceding speech frame. A procedure for substitution and muting of lost SID frames is described in section 6.4 of [11]. According to this a single frame classified as SID_BAD shall be substituted by the last valid SID frame information. If the time between SID information updates is greater than one second this shall lead to attenuation. Also the Speech Activity Indicator (SAI) is evaluated in tandeming mode. In contrast to the state of the art technology, the FQI and SAI in this invention shall not only be evaluated by the nodes of the mobile network but also by the nodes of the transport network that convey the frames transparently according to the state of the art.

The interworking between CS and PS speech services is done in the IP Multimedia Core Network Subsystem (IMS, 260). Speech frames are routed via the LTE core network entities Packet Data Network Gateway (PGW), Serving Gateway (SGW), 300 including the Security Gateway (GW), 320, to the Radio Access Network (100) via routers (240) in the Backbone (130) and routers (220) in the Aggregation Network (120) before they are scheduled in the eNodeB (330) and transmitted in downlink direction via the LTE air interface to the UE of the second user (UE2, 340). The Mobility Management Entity (MME, 310) is used for signaling and paging and is a connecting link between the Core Network (110) and Radio Access Network (100). Channel coding is added in the eNodeB (330) to protect the encoded speech against errors on the air interface. The eNodeB separates the encoded speech of this speech frame (20 ms duration) into smaller packets that are transmitted in several RBs. At the UE side, channel decoding is executed and the speech encoded at UE1 in case of TrFO or in the Core Network (110) in case of tandeming - in this example in the MSS/MGW (250) - is decoded and converted into acoustic waves that are radiated from the loudspeaker of the UE.

Fig. 2 also shows the GSM Radio Access Network (160) embedded in an IP transport network. The same principles as described for UMTS in the above described example are applied for a speech call between a GSM CS and an LTE PS network. In this case speech and channel encoding is done in the MS of subscriber 3 (MS3, 400), while channel decoding in uplink direction is performed by the Base Transceiver Station (BTS, 410). The task of the RNC (230) is done by the BSC (420). In GSM, BTS and BSC are interconnected via the Abis interface. One option for realising an IP-based transport network on the CS-based Abis interface is CS-emulation. In this case TDM data are embedded into Ethernet and switched again to TDM at the remote end. The peers are the BTS and BSC. The idea described in this invention shall therefore also be applied to GSM networks.

In GSM speech transcoding from one speech codec to another speech codec is done in a separate node, the TRAU (480). This means that for GSM the FQI and SAI/VAD are evaluated in the TRAU. Alternatively the BSC is connected to the MGW and FQI and SAI/VAD are evaluated in the MGW. In UMTS the transcoding function has been shifted to the MGW. Interworking between the GSM CS domain and the LTE PS domain is also performed in the IMS (260) and in LTE the same principles are applied as described for the case of the UMTS-LTE speech call. Also in the Aggregation Network (120) and the Backbone Network (130) the same principles are applied as described before.

1. Evaluation of VAD Flag and Frame Quality Indicator by all Nodes

The VAD flag and FQI shall not only be evaluated by the nodes of the mobile network involved in speech and channel decoding, i.e. UE, base stations (BTS, NodeB, eNodeB) or transcoding units, but also by the nodes of the transport network, especially by the routers in the Internet.

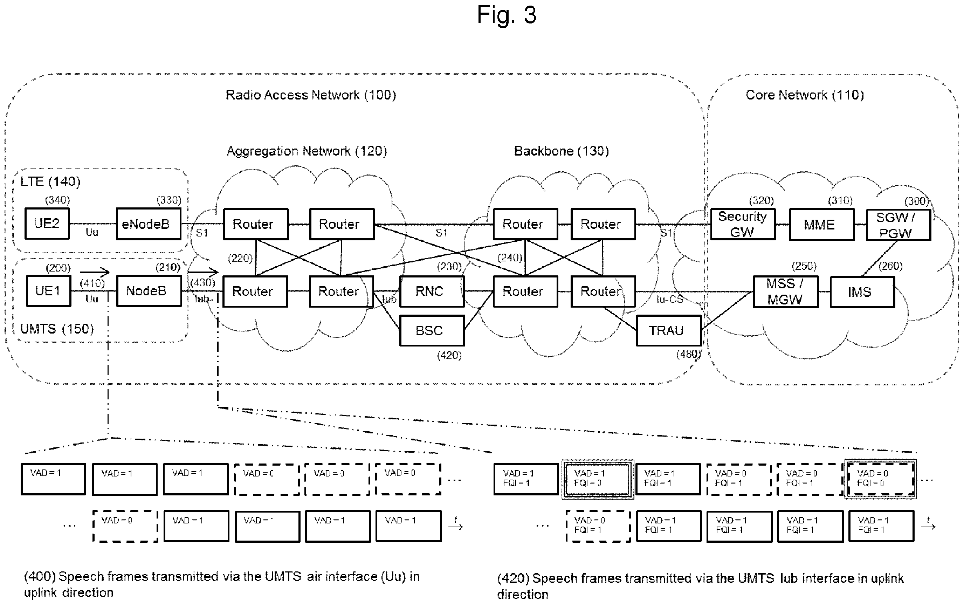

This new aspect is demonstrated in Fig. 3 representing a speech call between the CS based UMTS network and PS based LTE using mVoLTE. Human speech is encoded in UE1 (200) and VAD is used to identify speech pauses. According to [3] the VAD flag is a Boolean flag that is generated by the VAD algorithm and indicates the presence ("1") or the absence ("0") of a speech frame. Speech pauses are indicated in the SID frames. For the sake of simplicity, the example for transmitted speech frames on the air interface (Uu, 410) in uplink direction shows a VAD flag for the differentiation whether the speech frame contains active speech (VAD flag = 1; represented in (400) by solid frames) or non-active speech (VAD flag = 0; represented in (400) by dashed frames). Note that on the air interface a speech frame is transmitted in smaller amounts of data and assembled to a 20 ms speech frame in the BTS/NodeB/eNodeB for uplink direction and in the UE for downlink direction, respectively. During the transmission of encoded speech on the air interface in uplink direction, information about erroneous speech frames is not yet available.

Speech frames are marked as "good frame" or "bad frame / corrupted frame" after channel decoding in the NodeB (210). A FQI is added when inserting speech bits into the Iub frame structure. The FQI is now added and the speech frames (400) transmitted via the air interface (410) are transmitted combined with this information (420) via the Aggregation Network (120) to the RNC (230) and via the routers (240) in the Backbone Network (130) to the Core Network (110). Good Frames are indicated by FQI = 1, while Bad Frames / Corrupted Frames are indicated by FQI = 0 and represented by double frames in (420). For the sake of simplicity only a two-state indicator delivered to the speech decoder is described as this indicator is available in state of the art GSM and UMTS systems. Nevertheless, also any kind of multi-step indicator for the received quality could be used, representing quality ranges.

Speech decoding is executed in the MSS/MGW (250) in case of tandeming mode or in the remote UE2 (340) in case of TrFO. This means that the MGW is the first entity that evaluates VAD information and FQI. This represents prior art.

The basic principle of this invention is that the VAD flag as well as the FQI shall also be evaluated by the nodes of the transport network, in this example by the routers (220 and 240) in the Aggregation Network (120) and Backbone Network (130). A threshold based algorithm shall be applied to select speech frames for discarding during congestion. This procedure is described in detail in the following section.

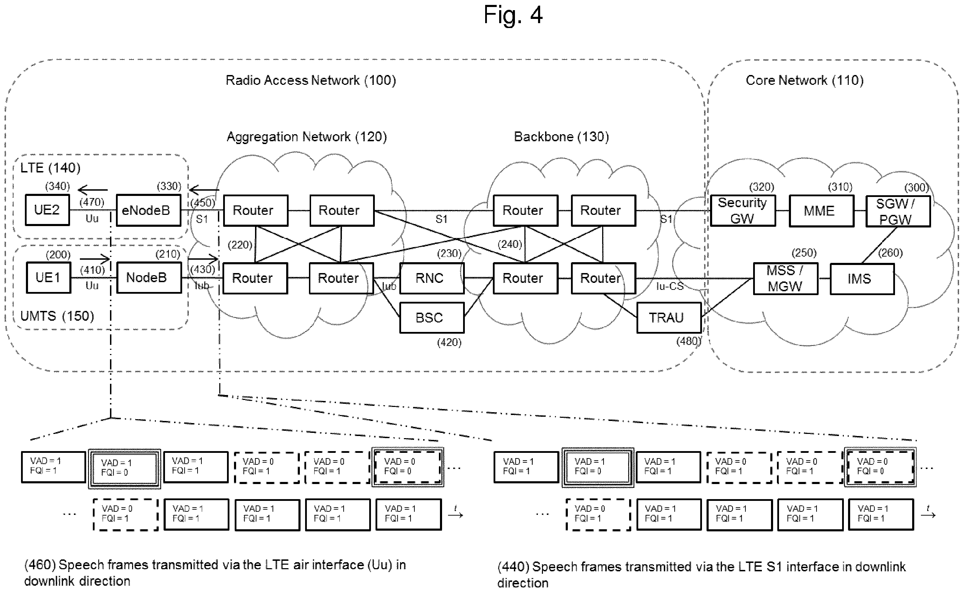

Fig. 4 shows in (440) the second part of the speech frame transmission from the LTE core element SGW (300) on the S1 interface (450) via the routers (240) in the Backbone Network (130) and the routers (220) in the Aggregation Network (120) to the eNodeB (330). According to state of the art technologies, the eNodeB uses VAD information but does not use the FQI information in downlink direction and transmits the speech frames (460) via the LTE air interface Uu (470) to the UE2 (340). Note that in downlink direction in TrFO mode the information about FQI is available. The UE evaluates both, VAD flag and optionally FQI for Error Concealment. The important aspect is that VAD information and FQI are not yet used by nodes of the transport network (state of the art technology).

2. Threshold based Algorithm to Select Frames for Discarding

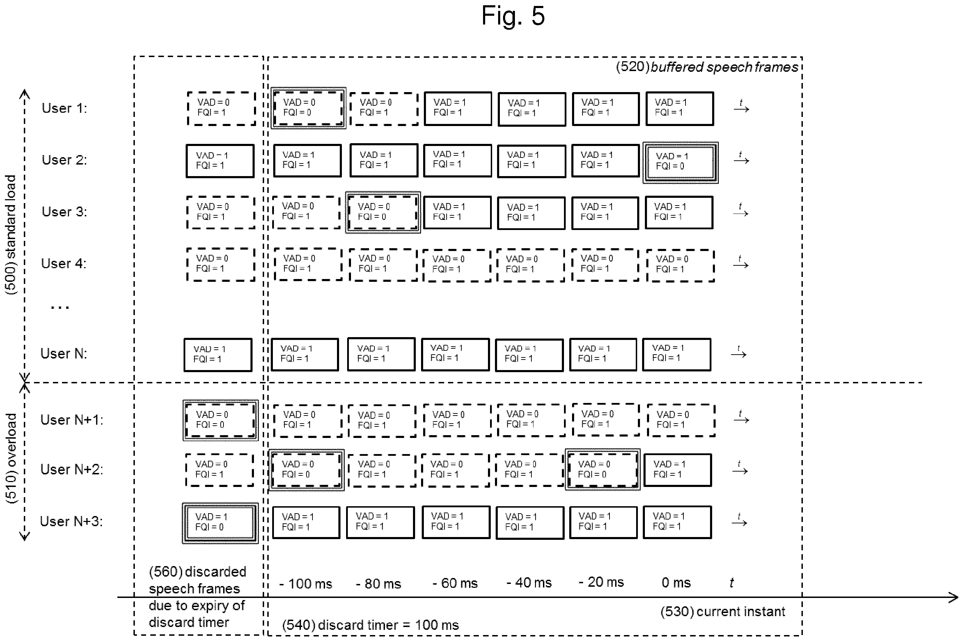

Fig. 5 shows an example for speech frames buffered in a network element, e.g. in a router of the transport network. For the sake of clarity only speech frames are shown but no frames for data services. Let N be the maximum number of users representing a "standard load" (500). If the number of users is equal or lower than N, all packets can be scheduled immediately. An overload situation is reached if more than N users are simultaneously served (510). Figure 5 demonstrates an overload situation in which six speech frames of each user (520) are buffered in the local node.

For each user a separate row is used. Speech frames received at the current instant (530) are shown on the right side. Frames left of it show previously received speech frames, i.e. 20 ms earlier, 40 ms earlier, 60 ms earlier etc. For a discard timer of 100 ms, up to six frames of each user can be buffered in the node, including the currently received speech frame. According to the state of the art, a speech frame will be discarded, if the discard timer expires. This situation is shown in (560).

The buffered frames of the N+3 users are shown within the dashed rectangle (520). According to this advantageous embodiment of the invention, the trigger conditions for discarding of speech frames shall be extended from a pure time based approach to a combination of actual buffering time before expiry of the discard timer, VAD status and FQI. The following procedure shall be applied for all speech frames covering the number of speech service users on one axis and the maximum number of buffered speech frames per user before expiry of the discard timer on the other axis of rectangle 520:

- Three variables shall be introduced for each buffered speech frame: SCORE_BUFFERING_TIME, SCORE_VAD, and SCORE_FQI.

- For every 20 ms a speech frame is buffered, the score SCORE_BUFFERING_TIME shall be incremented by 1. The score of a speech frame that just arrived at the node shall be initiated with SCORE_BUFFERING_TIME = 0. If this speech frame is buffered for 20 ms, the score shall be incremented to SCORE_BUFFERING_TIME = 1. This score shall again be incremented if the speech frame is buffered for further 20 ms, i.e. SCORE_BUFFERING_TIME = 2. In a further embodiment of this invention, a non-linear approach shall be used, i.e. for buffering the speech frame for 40 ms, its score SCORE_BUFFERING_TIME shall not be 2, but e.g. 3 or 4. This allows a more flexible adaptation of buffering time to scores and finally to scheduling priority.

- If the speech frame is characterised by VAD = 1, i.e. active speech, the score SCORE_VAD shall be set to a value A defined by a parameter. For VAD = 0, SCORE_VAD shall be set to the value B, which is also configurable via a parameter. If a multi-step indicator is used for VAD, a number of m variables shall be introduced, e.g. A1 to Am instead of the two variables A and B of the two-step solution.

- If the speech frame is characterised by FQI = 1, i.e. Good Frame, the score SCORE_FQI shall be set to a value C defined by a further parameter. For FQI = 0, SCORE_FQI shall be set to the value D, which is again a configurable parameter. If a multi-step indicator is used for FQI, a number of m variables shall be introduced, e.g. C1 to Cm instead of the two variables C and D of the two-step solution.

Three further parameters shall be introduced that define the weighting factor of each component:

- WEIGHT_BUFFERING_TIME,
- WEIGHT_VAD, and
- WEIGHT FQI.

In the next step a cost function shall be calculated for each buffered speech frame (equation 1):

$$
\text{COST} = \{\text{SCORE\_BUFFERING\_TIME} \cdot \text{WEIGHT\_BUFFERING\_TIME} + \text{SCORE\_VAD} \cdot \text{WEIGHT\_VAD} + \text{SCORE\_FQI} \cdot \text{WEIGHT\_FQI}\} / \{\text{WEIGHT\_BUFFERING\_TIME} + \text{WEIGHT\_VAD} + \text{WEIGHT\_FQI}\}
$$

Selective discarding of speech frames shall preferably be initiated already before expiry of the discard timer. For this purpose a first load threshold LOAD_THR1 shall be introduced that can be (a) an absolute load value, (b) a relative load value, (c) an absolute counter that is incremented with the number of currently buffered frames or (d) a relative value indicating the ratio of currently buffered frames and the total number of currently scheduled frames, or (e) any other load related measure.

The load is defined as load of all kind of services for which data are transmitted via the considered node. This includes traffic of speech services as well as traffic of data services.

A separation of the evaluated load shall be done according to the service type, e.g. according to conversational, streaming, interactive or background services.

The load threshold shall always refer to the same kind of traffic, i.e. if only conversational services are considered for selective discarding of packets, the current traffic load and the threshold LOAD_THR1 shall be limited to this service type.

If the current load exceeds LOAD_THR1, the following procedure shall be executed:

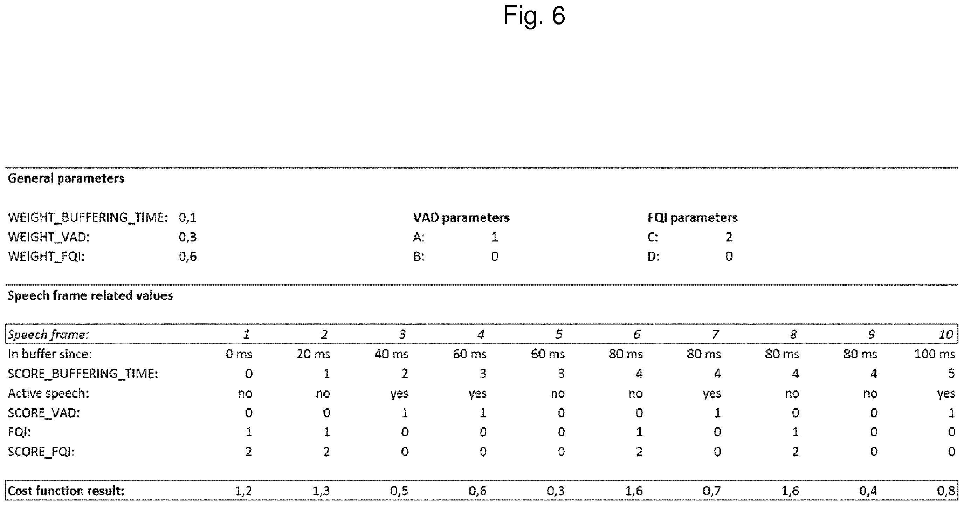

- Out of the buffered speech frames of all users (no user differentiation), those speech frames shall be marked that are characterised by FQI = 0 ("bad frame / corrupted frame") and/or non-active speech (VAD = 0). Preferably SID frames indicating the end of a silent phase shall not be included.
- Costs functions shall be calculated for each of the identified frames using equation 1.
- The overload on the node shall be reduced by discarding (i.e. deleting) a speech frame of the minimum cost function value. The lower the value of the cost function the lower is the importance of the speech frame to be scheduled. Equation 1 also includes a component that considers the period of time, for which the speech frame has already been buffered. This aspect allows differentiating between speech frames of same VAD status and FQI value. The weighting factor for the buffering time WEIGHT_BUFFERING_TIME is set to a value significantly lower than the weighting factors for VAD and FQI. A preferred solution is WEIGHT_FQI > WEIGHT_VAD > WEIGHT_BUFFERING_TIME as shown in Figure 6.
- Selective discarding shall be executed as long as the current traffic load is higher than a second load threshold LOAD_THR2. A hysteresis is configured by setting LOAD_THR1 > LOAD_THR2.
- If more speech frames are written into the buffer than those that can be discarded, e.g. because only a few speech frames are characterised by FQI = 0 or non-active speech, discarding of speech frames shall be executed based on expiry of the discard timer, i.e. the solution according to the state of the art shall be maintained. The scope of this invention is to enhance the currently applied functionality by proactively (i.e. already before expiry of the discard timer) selecting speech frames that are of low priority for scheduling either because they have erroneously been received or because they were generated during speech pauses (VAD = 0). The aim of this procedure is to reduce the buffering load and thus to save valid speech frames that otherwise would be discarded due to expiry of their discard timers. This procedure provides a performance improvement by reducing the number of speech frames that are discarded due to expiry of the timer although carrying valid speech frames.

According to the principle of this invention, Figure 6 shows an example of ten speech frames of several users currently being buffered in the node because not sufficient capacity is available to schedule them immediately on the related interface. The general parameters are equal for all speech frames and listed on top of this table. Highest importance for discarding speech frames is assigned to the FQI value, defined by WEIGHTING_FQI = 0.6 and the FQI parameter C set to the value 2. Lower importance is assigned to the VAD status, defined by WEIGHTING_VAD = 0.3 and value 1 for the VAD parameter A. The buffer time has only minor impact by setting WEIGHTING_BUFFERING_TIME to a low value of 0.1.

The speech frame related values represent ten examples differing in the period for which they are already kept in the buffer ("In buffer since"), their VAD status ("Active speech") and their FQI value ("FQI"). For each of this status information the corresponding score is calculated using the defined values.

This list contains speech frames that are either characterised by FQI = 0 ("bad frame / corrupted frame") or by non-active speech (VAD = 0) or by both characteristics. For each of these frames its cost function shall be calculated. The maximum of this cost function max(COST) represents the speech frame of highest scheduling priority, i.e. immediate scheduling is requested. These are typically speech frames that have already been buffered for a long period (buffering time close to discard timer), carry active speech (VAD = 1) or are not corrupted (FQI indicating a "good frame").

Discarding of speech frames shall start for the frame of lowest value of the cost function min(COST). In this example speech frame 5 shows the minimum value of 0.3. This speech frame has erroneously been received via the air interface (FQI = 0) and does not carry active speech. After discarding this speech frame, the load shall be evaluated again and the speech frame of the lowest cost function value shall be selected for discarding. In this example it is speech frame 9 with a cost function value of 0.4. This process shall be executed as long as the load exceeds LOAD_THR2 or no more speech frames marked for selective discarding are available in the buffer.

A further differentiation between speech frames of VAD = 0 shall be done by assigning higher scheduling importance to frames at the beginning of a silence period than to later frames in the same silence period. Preferably not the first speech frames after start of the silence period (SID frames on the 3G and 2G air interfaces) shall be discarded as they carry comfort noise information about the sender's acoustic background environment. This initial comfort noise information shall be transmitted and shall be used to generate comfort noise at the receiver side. This can be achieved by introducing a further parameter INITIAL_PHASE to define how many speech frames after start of the silence period shall be excluded from the discarding process. An alternative approach is to consider all speech frames during the silence period but to separate the parameter B into B1 and B2. B1 shall be used for B in the cost function calculation until the number of speech frames in the silence period reaches the value INITIAL_PHASE. After that B2 shall be used for B instead of B1.

A procedure shall be used to fairly distribute discarding of speech frames among the currently active users. The motivation is the human perception of speech, which is perceived as more distorted if multiple consecutive speech frames are discarded, because error concealment cannot compensate it adequately, especially in voiced speech segments. Error concealment algorithms are very effective to mitigate occasional packet losses. To improve the overall quality, discarding of speech frames shall rather be done for the frames belonging to different connections than selecting speech frames of a single connection. This aspect shall preferentially be considered by extending equation 1 with a penalty term that shall be increased if speech frames of a connection have been discarded recently, i.e. within the last n speech frames. Thus a combination of this criterion with the previously considered conditions is realised.

This procedure is preferably implemented on a node basis and acting locally. Thus counters for the number of discarded speech frames of a connection do not have to be exchanged between different nodes.

Another embodiment not of this invention foresees this extension. For each active connection, one counter shall be introduced that will be incremented with each speech frame discarded in this connection. The target is to avoid discarding of subsequent speech frames for a specific connection throughout the whole transport path. Preferentially a mechanism shall be implemented that decrements the counter value if no discarding has been executed for this connection during the last n speech frames with n as a configurable parameter.

This procedure shall be applied for CS speech services, as well as for PS speech services including VoIP and mVoLTE.

3. Maintenance of Sequence and Time after Selective Discarding of Speech Frames

It is the principle of this invention to select the best suited speech frame for discarding, i.e. the one of lowest cost function value with the aim to minimise negative impact on user perception. To keep the strict time sequence for scheduling of speech frames, a procedure shall be introduced to avoid early scheduling: A counter on connection basis and for each direction (from user A to B and from user B to A) shall be introduced in the node. For each speech frame that has been discarded for a specific connection, its counter shall be incremented. This counter indicates the additional delay that has to be taken into consideration until the next valid speech frame of this connection shall be transmitted in the considered direction.

This suggests that the number of potential speech frames for discarding is limited to speech frames of the same timing position. In Figure 5 the frame to be discarded can still be selected out of the plurality of N+3 users, however restricted to the same "scheduling time". Note that scheduling is done continuously and not in blocks, therefore the term "scheduling time" represents a certain interval of time.

Counters for each connection and direction shall be used locally at the corresponding node. Thus information about the number of discarded speech frames does not have to be transferred to other nodes, neither to the receiver side. For the speech decoding process on receiver side selective discarding of speech frames shall be handled similar to discarding a speech frame because of expiry of the discard timer.

4. Adding Time Sequence Information to the Speech Frames

The transmission of the buffered frames shall be executed regardless of the number of frames that have been discarded in between. Alternatively to the procedure described in the previous section 3, as much as possible buffered speech frames shall be scheduled taking only into consideration bandwidth limitations on the interface, traffic of other services, e.g. data traffic and scheduling restrictions. This means: Let currently three speech frames of a specific user (connection) be buffered that arrived in the node at current time t minus 60 ms (first buffered speech frame), t - 40 ms (second buffered speech frame) and t - 20 ms (third buffered speech frame). Assuming that the second buffered speech frame is characterised by FQI = 0 and VAD = 0 and has the lowest cost function value out of all buffered speech frames, then this second buffered speech frame shall be discarded. If transmission resources are available at the instance at which this discarded speech frame normally had to be scheduled, another buffered speech frame shall be scheduled, even if this other speech frame normally should be scheduled later. Let the third buffered speech frame of this user be the one that is scheduled instead of the discarded speech frame, then the speech frame arrived at t - 20 ms shall fill this physical transmission resource and shall be transmitted one speech frame period (20 ms) earlier. This procedure allows a more efficient resource utilisation by mitigating the overload situation at the node and thus offering buffer capacity to new incoming frames.

To avoid wrong assembling of the speech frames at the receiver side, i.e. at the remote terminal, the time information shall be added. This means information about the number of frames that have been discarded in the stream of speech frames for this particular user shall be added to inform the speech decoder about the period to wait until processing the next following valid speech frame. This solution introduces a so-called delay buffer that allows to balance various scheduling delays in different network nodes. It also avoids that the audio signal is compressed in its duration and the received speech is shorter than the spoken speech.

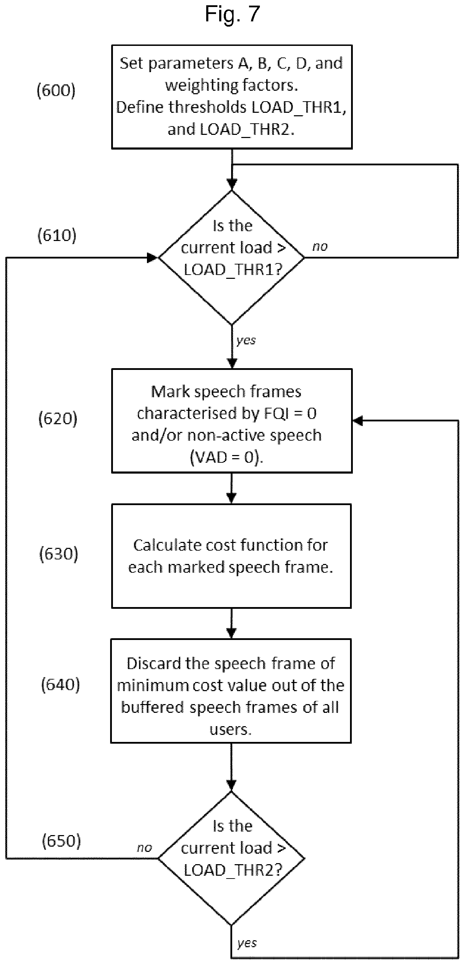

A flow chart of the threshold based algorithm in this invention is shown in Figure 7. In step (600) the parameters introduced for selective discarding of speech frames are defined. Their values shall be stored locally at the corresponding node of the transport network. These parameters assign values for the different states, i.e. value A for active speech (VAD = 1), B for non-active speech (VAD = 0), C for FQI = 1 (good frame) and D for FQI = 0 (bad frame). In addition the weighting factors WEIGHT_BUFFERING_TIME, WEIGHT_VAD, and WEIGHT_FQI shall be defined in this step. These weighting factors are used to combine the values A, B, C, and D assigned to FQI and VAD states with the specific importance of their states. Furthermore the two load thresholds LOAD_THR1 and LOAD_THR2 shall be set that define the starting and end point of the procedure.

According to (610) the current load shall permanently be compared to the defined threshold LOAD_THR1. If the load exceeds LOAD_THR1, buffered as well as new incoming speech frames shall be marked in step (620) that are characterised either by FQI = 0 (bad frame) or by non-active speech (VAD = 0). A logical OR-function (corresponding to an OR gatter) shall be used that marks this speech frame if one or both conditions are met.

In step (630) the cost function for each of the marked speech frames shall be calculated according to equation 1 using the parameters defined in step (600).

In step (640) the speech frame characterised by the lowest value of its cost function shall be identified and discarded, irrespectively of expiry of its discard timer.

After having discarded (i.e. deleted) this speech frame the current traffic load shall be compared to LOAD_THR2 in step (650). As long as the traffic load exceeds this threshold, the procedure shall repeat steps (620), (630) and (640) and discard further speech frames if there are marked speech frames available. If no speech frames for discarding are buffered, the procedure shall continue without discarding a speech frame. If in step (650) the current traffic load is equal or lower than LOAD_THR2, the procedure shall continue at step (610) and the current traffic load shall be compared with LOAD_THR1, which is preferably set to a higher value than LOAD_THR2.

In summary, the inventive principle is given below.

1. Evaluation of FQI and VAD status of speech frames generated in the mobile network by nodes in the transport network, e.g. by routers in the Internet. This is an extension of the state of the art, in which FQI or VAD status is only evaluated by the entities of the mobile network.

2. Marking of these speech frames out of the plurality of speech frames of all users routed via this node for further processing in the node of the transport network.

3. Discarding preferably these frames in overload situations.

Specific embodiments are characterised by at least one of the following features:

- Procedure for selective discarding to be executed in nodes of the transport network.
- Introduction of a first load threshold to define the starting point of selective discarding of speech frames.
- Introduction of a second load threshold to define the end point of the procedure.

- Introduction of four parameters to assign values for active speech (VAD = 1), non-active speech (VAD = 0), good frames (FQI = 1) and bad frames (FQI = 0). Extension of the two-state FQI differentiation to a multi-step solution introducing further parameters to differentiate between various quality states.
- Introduction of one parameter to consider the time for which the frame has already been buffered in this node.
- Introduction of three weighting factors to assign different importance to FQI information, VAD status and already elapsed buffering time.
- Introduction of a threshold to further separate between speech frames generated at the beginning of a silence period or at a later instance of the same silence period.
- Extension of this procedure by storing the information whether speech frames of the same connection have recently been discarded to avoid discarding of speech frames in a row.
- Use of cost functions to combine the introduced values with the introduced weighting factors and for calculating one resulting value for each marked speech frame. The output of the cost function is the value that is used for selecting speech frames to be discarded.
- Selection of the frame of minimum cost function output.
- Discarding of the selected frame to mitigate the overload situation and thus to save good frames from discarding due to expiry of their discard timer.
- Smooth integration of this procedure into procedures according to state of the art products, for which discarding of speech frames is executed after expiry of the discard timer.
- A procedure that uses internal counters in the nodes of the transport network to preserve the intrinsic sequence of speech frames and related time after discarding of speech frames for scheduling the next speech frame to a specific user.
- A procedure that allows early scheduling of speech frames if preceding speech frames have been discarded and transmission capacity is available. Information necessary to maintain the sequence and time for processing the speech frame shall be sent to the receiving side by adding this information to the speech frame. This procedure allows a highly economic resource utilisation in transport networks.

Industrial Applicability:

This invention is applicable to all mobile networks that use an IP based transport network, which is the typical case for today's and future networks of the 3GPP standard such as GSM, UMTS, LTE, LTE-A, and 5G.

Scope of the Invention:

A new aspect is that the FQI as well as VAD flag or comparable indicators are not only evaluated on both ends of the conversation, but also on transmission nodes that according to state of the art products do not analyse or use this information.

It is the scope of the invention to extend the evaluation of speech frames carrying active speech or non-active speech from the transcoder units (in UMTS located in MGW; in GSM located in TRAU) to nodes in the transport network.

The invention does not avoid discarding of speech frames in high load situations, but it selects those speech frames for discarding that do not carry valuable information for speech services for the benefit of being able to transmit speech frames of higher value using the available limited transport resources. Benefit is taken by extending the candidate list for speech frame discarding to all speech service users being transported via this node. The situation can be compared to a balloon in a critical weather condition. Instead of indiscriminately discharging ballast for maintaining its height, freight is selected that has lowest importance.

Abbreviations:

3GPP      3rd Generation Partnership Project
5G        Fifth Generation
ARP       Allocation/Retention Priority
ATM       Asynchronous Transfer Mode
BSC       Base Station Controller
BTS       Base Transceiver Station
CS        Circuit-Switched
DTX       Discontinuous Transmission
eMLPP     enhanced Multi-Level Precedence and Pre-emption

| | |
|---|---|
| eNodeB | evolved NodeB (LTE base station) |
| FQI | Frame Quality Indicator |
| GSM | Global System for Mobile Communications |
| GW | Gateway |
| IMS | IP Multimedia Core Network Subsystem |
| IP | Internet ProtocolLTE Long Term Evolution |
| LTE-A | LTE Advanced |
| MCS | Modulation and Coding Scheme |
| MGW | Media Gateway |
| MME | Mobility Management Entity |
| MPLS | Multiprotocol Label Switching |
| MS | Mobile Station |
| MSRP | Message Session Relay Protocol |
| MSS | Mobile Switching Centre Server |
| mVoLTE | mobile Voice over Long Term Evolution |
| NodeB | UMTS base station |
| PCM | Pulse Code Modulation |
| PGW | Packet Data Network Gateway |
| PS | Packet-Switched |
| QoS | Quality of Service |
| RB | Resource Block |
| RNC | Radio Network Controller |
| SAI | Speech Activity Indicator |
| SDH | Synchronous Digital Hierarchy |
| SGW | Serving Gateway |
| SID | Silence Descriptor |
| SMS | Short Message Service |
| TDM | Time Division Multiplexing |
| TDMA | Time Division Multiple Access |
| TFO | Tandem Free Operation |
| TRAU | Transcoder and Rate Adaptation Unit |
| TrFO | Transcoder Free Operation |
| TTI | Transmission Time Interval |
| UE | User Equipment |
| UMTS | Universal Mobile Telecommunications System |
| Uu | UMTS/LTE air interface |
| VAD | Voice Activity Detection |
| VoIP | Voice over Internet Protocol |
| VoLTE | Voice over LTE |

Literature:

[1] 3GPP TS 26.094 V11.0.0, "Mandatory speech codec speech processing functions; Adaptive Multi-Rate (AMR) speech codec; Voice Activity Detector (VAD)", 2012, http://www.3gpp.org.

[2] 3GPP TS 26.092 V11.0.0, "Mandatory speech codec speech processing functions; Adaptive Multi-Rate (AMR) speech codec; Comfort noise aspects", 2012, http://www.3gpp.org.

[3] 3GPP TS 26.093 V11.0.0, "Mandatory speech codec speech processing functions Adaptive Multi-Rate (AMR) speech codec; Source controlled rate operation", 2012, http://www.3gpp.org.

[4] 3GPP TS 26.071 V11.0.0, "Mandatory speech CODEC speech processing functions; AMR speech CODEC; General description", 2012, http://www.3gpp.org.

[5] Telecommunication Standardization Sector of International Telecommunication Union ITU-T, Series G: Transmission Systems and Media, Digital Systems and Networks, International telephone connections and circuits - General definitions, "Definition of categories of speech transmission quality", ITU-T Recommendation G.109, 1999.

[6] Telecommunication Standardization Sector of International Telecommunication Union ITU-T, Series G: Transmission Systems and Media, Digital Systems and Networks, International telephone connections and circuits - General definitions, "Definition of categories of speech transmission quality; Amendment 1: New Appendix I - The E-model-based quality contours for predicting speech transmission quality and user satisfaction from time-varying transmission impairments", ITU-T Recommendation G.109 - Amendment 1, 1999.

[7] F. Boavida, E. Monteiro, S. Mascolo, Y. Koucheryavy, "Wired/Wireless Internet Communications", in proceedings of 5th International Conference, WWIC 2007, Coimbra, Portugal, 2007, Springer Berlin Heidelberg New York, ISBN-13: 978-3-540-72694-4, http ://books. google. de/books?id=i18C_INjwAEC&pg=PA187&lpg=PA187&dq=VoIP +timer+discard&source=bl&ots=hCnJiCyhpl&sig=5G000e2XW4AtPUFKkgWeK70m Meo&hl=de&sa=X&ei=yh6YU_mSJMXJPLKHgLAL&ved=0CBQQ6AEwAA#v=onep age&q=VoIP%20timer%20discard&f=false.

[8] 3GPP TS 23.107 V11.0.0, "Quality of Service (QoS) concept and architecture", 2012, http://www.3gpp.org.

[9]                                            http://www.pscr.gov/projects/broadband/700mhz_demo_net/meetings/inaug_stakeh older_mtg_042010/day_2/5_Priority_Preemption_and_QoS-final.pdf.

[10] 3GPP TS 26.201 V11.0.0, "Speech codec speech processing functions; Adaptive Multi-Rate - Wideband (AMR-WB) speech codec; Frame structure", 2012, http://www.3gpp.org.

[11] 3GPP TS 26.091 V11.0.0, 2012, "Mandatory Speech Codec speech processing functions; Adaptive Multi-Rate (AMR) speech codec; Error concealment of lost frames ", http://www.3gpp.org.

**Claims**

1. A device comprising means for forwarding or routing speech frames in a transport network of a mobile communications system, the device further comprising:

   a buffer for storing incoming speech frames of a plurality of users of the mobile communications system, and a discarding unit for discarding speech frames,
   wherein the discarding unit is adapted to discard a speech frame stored in the buffer on basis of content of the speech frame,
   **characterised in that**
   the content of the speech frame comprises information about the quality of said speech frame indicating whether the speech frame has been erroneously received in the uplink transmission of the air interface.

2. The device of claim 1, wherein the quality of said speech frame is indicated by a FQI-flag and the discarding unit is adapted to discard the speech frame on basis of its status of the FQI-flag.

3. The device of anyone of the preceding claims, wherein the content of the speech frame further comprises information about the presence or absence of active speech transmitted by said speech frame and the presence of active speech of said speech frame is indicated by a VAD-flag and the discarding unit is adapted to discard a speech frame on basis of its status of the VAD-flag.

4. The device of anyone of the preceding claims, wherein the device is adapted to receive and to output speech frames in the form of IP-packets.

5. The device of anyone of the preceding claims, wherein the transport network of the mobile communications system is the part between the two entities being in direct connection with the mobile terminals over an air interface.

6. The device of anyone of the preceding claims, wherein the transport network of the mobile communications system is the part between the two entities in the communication path performing channel coding for the transmission of data to be transmitted via an air interface and/or the reception of data received via the air interface.

7. The device of anyone of the preceding claims, wherein the device is a router.

8. The device of anyone of the preceding claims, wherein the mobile communications system is a GSM-system, a UMTS-system, a LTE-system and/or a combination thereof.

9. The device of anyone of the preceding claims, wherein the discarding unit is further adapted to discard the speech frame on basis of the time passed since receiving said speech frame, and preferably, the speech frame is discarded upon expiration of a discard timer.

10. The device of anyone of the preceding claims, wherein the discarding unit is further adapted to discard speech frames upon reaching a first threshold indicating an overload situation of the device, the overload situation being defined when, over a certain period of time, the amount of incoming speech frames is larger than the maximum amount of speech frames that can be forwarded or routed by the device.

11. The device according to the preceding claim, wherein the discard unit is further adapted to stop discarding of speech frames upon the device falling short of a second threshold indicating a load situation below the first threshold.

12. The device of anyone of the preceding claims, wherein the discarding unit is further adapted to discard the speech frame when a threshold is reached, preferably the threshold being

   a) an absolute load value of the device,
   b) a relative load value of the device,
   c) an absolute counter that is incremented with the number of currently buffered frames,
   d) a relative value indicating the ratio of currently buffered frames and the total number of currently scheduled frames, and/or
   e) another load related measure.

13. The device of anyone of the preceding claims, wherein the discarding unit is further adapted to select the speech frame to be discarded by further executing a cost function taking into account the following parameters:

   a) the time passed since receiving the speech frame, i.e. a Buffering Time Parameter,
   b) the quality of the speech frame, i.e. a Quality Parameter, preferably on basis of a FQI-flag of the speech frame, and
   c) the presence of silent phases in the speech frame, i.e. a Silence Parameter, preferably on basis of a VAD-flag of the speech frame.

14. The device of claim 13, wherein the cost function is based by multiplying respective weighting factors to each of the parameters, i.e. Weight Buffering Time, Weight Quality and Weight Silence.

15. The device of claim 14, wherein the cost function is calculated by:

$$\{\text{Buffering Time Parameter} \cdot \text{Weight Buffering Time} + \text{Quality Parameter} \cdot \text{Weight Quality} + \text{Silence Parameter} \cdot \text{Weight Silence}\} / \{\text{Weight Buffering Time} + \text{Weight Quality} + \text{Weight Silence}\},$$

and the frame in the buffer having the smallest cost function is discarded by the discarding unit.

16. The device of anyone of the preceding claims, further comprising means for adding time sequence information to a speech frame to be forwarded or routed, wherein the means is adapted to add information comprising the number of frames that have been discarded in the corresponding stream of speech frames for a particular user.

17. The device of anyone of the preceding claims, wherein the discarding unit is further adapted to discard the speech frame stored in the buffer on the further basis of its relative position within a silence period transmitted by a plurality of speech frames of a stream of speech frames for a particular user, wherein a speech frame at the beginning of said silence period is less likely to be discarded than a speech frame at a later instance of said silence period.

18. A method for forwarding or routing speech frames in a transport network of a mobile communications system, the method comprising the steps:

receiving incoming speech frames of a plurality of users of the mobile communications system,
storing the incoming speech frames of the plurality of users of the mobile communications system in a buffer, and
discarding a speech frame of the speech frames stored in the buffer on basis of content of the speech frame,
**characterised in that**
the content of the speech frame comprises information about the quality of said speech frame indicating whether the speech frame has been erroneously received in the uplink transmission of the air interface.

19. The method of claim 18, wherein the method is performed by a transport node of the mobile communications system's transport network.

20. The method of anyone of the preceding claims 18 or 19, wherein the method is performed by all, a plurality or at least three transport nodes of the mobile communications system's transport network.


**Patentansprüche**

1. Vorrichtung, aufweisend Mittel zur Weiterleitung oder zum Routing von Sprachrahmen in einem Transportnetz eines Mobilkommunikationssystems, wobei die Vorrichtung ferner aufweist:

einen Puffer zum Speichern von eingehenden Sprachrahmen einer Vielzahl von Nutzern des Mobilkommunikationssystems, und
eine Verwerfungseinheit zum Verwerfen von Sprachrahmen,
wobei die Verwerfungseinheit eingerichtet ist, einen Sprachrahmen, der in dem Puffer gespeichert ist, auf Grundlage des Inhalts des Sprachrahmens zu verwerfen,
**dadurch gekennzeichnet, dass**
der Inhalt des Sprachrahmens Informationen über die Qualität des Sprachrahmens aufweist, die angeben, ob der Sprachrahmen fälschlicherweise in der Aufwärtsübertragung der Funkschnittstelle empfangen wird.

2. Vorrichtung nach Anspruch 1, wobei die Qualität des Sprachrahmens von einem FQI-Flag angegeben wird und die Verwerfungseinheit eingerichtet ist, den Sprachrahmen auf Grundlage von seinem Status des FQI-Flags zu verwerfen.

3. Vorrichtung nach einem der vorhergehenden Ansprüche, wobei der Inhalt des Sprachrahmens ferner Informationen über das Vorhandensein oder Nichtvorhandensein aktiver Sprache umfasst, die von dem Sprachrahmen übertragen wird, und die Anwesenheit aktiver Sprache des Sprachrahmens von einem VAD-Flag angegeben wird und die Verwerfungseinheit eingerichtet ist, einen Sprachrahmen auf Grundlage von seinem Status des VAD-Flags zu verwerfen.

4. Vorrichtung nach einem der vorhergehenden Ansprüche, wobei die Vorrichtung eingerichtet ist, Sprachrahmen in Form von IP-Paketen zu empfangen oder auszugeben.

5. Vorrichtung nach einem der vorhergehenden Ansprüche, wobei das Transportnetz des Mobilkommunikationssystems der Teil zwischen zwei Entitäten ist, der über eine Funkschnittstelle in direkter Verbindung mit den mobilen Endgeräten steht.

6. Vorrichtung nach einem der vorhergehenden Ansprüche, wobei das Transportnetz des Mobilkommunikationssystems der Teil zwischen zwei Entitäten in dem Kommunikationspfad ist, der Kanalkodierung zur Übertragung von Daten, die über eine Funkschnittstelle zu übertragen sind, und/oder zum Empfangen von Daten, die über die Funkschnittstelle empfangen werden, durchführt.

7. Vorrichtung nach einem der vorhergehenden Ansprüche, wobei die Vorrichtung ein Router ist.

8. Vorrichtung nach einem der vorhergehenden Ansprüche, wobei das Mobilkommunikationssystem ein GSM-System, ein UMTS-System, ein LTE-System und/oder eine Kombination dieser ist.

9. Vorrichtung nach einem der vorhergehenden Ansprüche, wobei die Verwerfungseinheit ferner eingerichtet ist, den Sprachrahmen auf Grundlage der seit dem Empfangen des Sprachrahmens verstrichenen Zeit zu verwerfen, und vorzugsweise der Sprachrahmen nach Ablauf eines Verwerfungstimers verworfen wird.

10. Vorrichtung nach einem der vorhergehenden Ansprüche, wobei die Verwerfungseinheit ferner eingerichtet ist, Sprachrahmen nach dem Erreichen eines ersten Schwellenwerts, der eine Überlastsituation der Vorrichtung angibt, zu verwerfen, wobei die Überlastsituation als solche definiert ist, wenn über einen gewissen Zeitrahmen hinweg die Menge an eingehenden Sprachrahmen größer ist als die maximale Menge an Sprachrahmen, die von der Vorrichtung weitergeleitet oder geführt werden können.

11. Vorrichtung nach dem vorhergehenden Anspruch, wobei die Verwerfungseinheit ferner eingerichtet ist, das Verwerfen von Sprachrahmen zu beenden, sobald die Vorrichtung einen zweiten Schwellenwert nicht erreicht, der eine Lastsituation unterhalb des ersten Schwellenwerts angibt.

12. Vorrichtung nach einem der vorhergehenden Ansprüche, wobei die Verwerfungseinheit ferner eingerichtet ist, den Sprachrahmen zu verwerfen, wenn ein Schwellenwert erreicht wird, wobei der Schwellenwert vorzugsweise

> a) ein absoluter Lastwert der Vorrichtung ist,
> b) ein relativer Lastwert der Vorrichtung ist,
> c) ein Absolut-Zähler ist, der mit der Anzahl der aktuell gepufferten Rahmen erhöht wird,
> d) ein relativer Wert ist, der das Verhältnis von aktuell gepufferten Rahmen und der Gesamtzahl der aktuell geplanten Rahmen angibt, und/oder
> e) ein anderes, lastbezogenes Maß.

13. Vorrichtung nach einem der vorhergehenden Ansprüche, wobei die Verwerfungseinheit ferner eingerichtet ist, den Sprachrahmen zu wählen, der verworfen werden soll, indem ferner eine Kostenfunktion durchgeführt wird, bei der die folgenden Parameter in Betracht gezogen werden:

> a) die seit dem Empfangen des Sprachrahmens verstrichene Zeit, d.h. ein Pufferzeitparameter,
> b) die Qualität des Sprachrahmens, d.h. ein Qualitätsparameter, vorzugsweise auf Grundlage eines FQI-Flags des Sprachrahmens, und
> c) das Vorhandensein von stillen Phasen in dem Sprachrahmen, d.h. ein Stilleparameter, vorzugsweise auf Grundlage eines VAD-Flags des Sprachrahmens.

14. Vorrichtung nach Anspruch 13, wobei die Kostenfunktion auf der Multiplikation jeweiliger Gewichtungsfaktoren mit jedem der Parameter basiert, d.h. Gewichtpufferzeit, Gewichtqualität und Gewichtstille.

15. Vorrichtung nach Anspruch 14, wobei die Kostenfunktion folgendermaßen berechnet wird:

$$\{\text{Pufferzeitparameter} \times \text{Gewichtpufferzeit} + \text{Qualitätsparameter} \times \text{Gewichtqualität} + \text{Stilleparameter} \times \text{Gewichtstille}\} / \{\text{Gewichtpufferzeit} + \text{Gewichtqualität} + \text{Gewichtstille}\},$$

und der Rahmen in dem Puffer, der die kleinste Kostenfunktion hat, von der Verwerfungseinheit verworfen wird.

16. Vorrichtung nach einem der vorhergehenden Ansprüche, ferner aufweisend Mittel zum Hinzufügen von Zeitsequenzinformationen zu einem Sprachrahmen, der weitergeleitet oder geführt werden soll, wobei die Mittel eingerichtet sind, Informationen hinzuzufügen, welche die Anzahl von Rahmen umfassen, die in dem entsprechenden Strom von Sprachrahmen für einen bestimmten Nutzer verworfen wurden.

17. Vorrichtung nach einem der vorhergehenden Ansprüche, wobei die Verwerfungseinheit ferner eingerichtet ist, den Sprachrahmen, der in dem Puffer gespeichert ist, ferner auf Grundlage seiner relativen Position innerhalb einer Stilleperiode, die von einer Vielzahl von Sprachrahmen eines Stroms von Sprachrahmen für einen bestimmten Nutzer übertragen wird, zu verwerfen, wobei es für einen Sprachrahmen am Anfang der Stilleperiode weniger wahrscheinlich ist, verworfen zu werden, als für einen Sprachrahmen an einem späteren Zeitpunkt der Stilleperiode.

**18.** Verfahren zur Weiterleitung oder zum Routing von Sprachrahmen in einem Transportnetz eines Mobilkommunikationssystems, wobei das Verfahren die folgenden Schritte umfasst:

Empfangen von eingehenden Sprachrahmen einer Vielzahl von Nutzern des Mobilkommunikationssystems,
Speichern der eingehenden Sprachrahmen der Vielzahl von Nutzern des Mobilkommunikationssystems in einem Puffer, und
Verwerfen eines Sprachrahmens der Sprachrahmen, die im Puffer gespeichert sind, auf Grundlage des Inhalts des Sprachrahmens,
**dadurch gekennzeichnet, dass**
der Inhalt des Sprachrahmens Informationen zu der Qualität des Sprachrahmens umfasst, die angeben, ob der Sprachrahmen fälschlicherweise in der Aufwärtsübertragung der Funkschnittstelle empfangen wurde.

**19.** Verfahren nach Anspruch 18, wobei das Verfahren von einem Transportknoten des Transportnetzes des Mobilkommunikationssystems durchgeführt wird.

**20.** Verfahren nach einem der vorhergehenden Ansprüche 18 oder 19, wobei das Verfahren von allen, einer Vielzahl, oder zumindest drei Transportknoten des Transportnetzes des Mobilkommunikationssystems durchgeführt wird.


**Revendications**

**1.** Dispositif comprenant des moyens destinés à transférer ou à router des trames vocales dans un réseau de transport d'un système de communication mobile, le dispositif comprenant en outre :

un circuit tampon destiné à stocker des trames vocales entrantes d'une pluralité d'utilisateurs du système de communication mobile, et
une unité de mise au rebut destinée à mettre au rebut des trames vocales,
dans lequel l'unité de mise au rebut est conçue pour mettre au rebut une trame vocale stockée dans le circuit tampon sur la base du contenu de la trame vocale,
**caractérisé en ce que**
le contenu de la trame vocale comprend des informations concernant la qualité de ladite trame vocale indiquant si oui ou non la trame vocale a été reçue par erreur dans la transmission sens montant de l'interface hertzienne.

**2.** Dispositif selon la revendication 1, dans lequel la qualité de ladite trame vocale est indiquée par un indicateur FQI et l'unité de mise au rebut est conçue pour mettre au rebut la trame vocale sur la base de son statut de l'indicateur FQI.

**3.** Dispositif selon l'une quelconque des revendications précédentes, dans lequel le contenu de la trame vocale comprend en outre des informations concernant la présence ou l'absence de contenu vocal actif transmis par ladite trame vocale et la présence de contenu vocal actif de ladite trame vocale est indiquée par un indicateur VAD et l'unité de mise au rebut est conçue pour mettre au rebut une trame vocale sur la base de son statut de l'indicateur VAD.

**4.** Dispositif selon l'une quelconque des revendications précédentes, dans lequel le dispositif est conçu pour recevoir et pour délivrer en sortie des trames vocales sous la forme de paquets IP.

**5.** Dispositif selon l'une quelconque des revendications précédentes, dans lequel le réseau de transport du système de communication mobile est la partie entre les deux entités en connexion directe avec les terminaux mobiles sur une interface hertzienne.

**6.** Dispositif selon l'une quelconque des revendications précédentes, dans lequel le réseau de transport du système de communication mobile est la partie entre les deux entités dans le trajet de communication réalisant un codage de canal pour la transmission de données devant être transmises via une interface hertzienne et/ou la réception de données reçues via l'interface hertzienne.

**7.** Dispositif selon l'une quelconque des revendications précédentes, dans lequel le dispositif est un routeur.

**8.** Dispositif selon l'une quelconque des revendications précédentes, dans lequel le système de communication mobile est un système GSM, un système UMTS, un système LTE et/ou une combinaison de ceux-ci.

**9.** Dispositif selon l'une quelconque des revendications précédentes, dans lequel l'unité de mise au rebut est en outre conçue pour mettre au rebut la trame vocale sur la base du temps passé depuis la réception de ladite trame vocale, et de préférence, la trame vocale est mise au rebut lors de l'expiration d'un minuteur de mise au rebut.

**10.** Dispositif selon l'une quelconque des revendications précédentes, dans lequel l'unité de mise au rebut est en outre conçue pour mettre au rebut des trames vocales lorsqu'un premier seuil indiquant une situation de surcharge du dispositif est atteint, la situation de surcharge étant définie lorsque, sur une certaine période, la quantité de trames vocales entrantes est supérieure à la quantité maximale de trames vocales qui peuvent être transférées ou routées par le dispositif.

**11.** Dispositif selon la revendication précédente, dans lequel l'unité de mise au rebut est en outre conçue pour mettre fin à la mise au rebut de trames vocales lorsque le dispositif est inférieur à un second seuil indiquant une situation de charge sous le premier seuil.

**12.** Dispositif selon l'une quelconque des revendications précédentes, dans lequel l'unité de mise au rebut est en outre conçue pour mettre au rebut la trame vocale lorsqu'un seuil est atteint, le seuil étant de préférence

    a) une valeur de charge absolue du dispositif,
    b) une valeur de charge relative du dispositif,
    c) un compteur absolu qui est incrémenté avec le nombre de trames actuellement mises en tampon,
    d) une valeur relative indiquant le rapport de trames actuellement mises en tampon et le nombre total de trames actuellement planifiées, et/ou
    e) une autre mesure liée à la charge.

**13.** Dispositif selon l'une quelconque des revendications précédentes, dans lequel l'unité de mise au rebut est en outre conçue pour sélectionner la trame vocale devant être mise au rebut en exécutant en outre une fonction de coût prenant en compte les paramètres suivants :

    a) le temps passé depuis la réception de la trame vocale, à savoir un paramètre de temps de mise en tampon,
    b) la qualité de la trame vocale, à savoir un paramètre de qualité, de préférence sur la base d'un indicateur FQI de la trame vocale, et
    c) la présence de phases silencieuses dans la trame vocale, à savoir un paramètre de silence, de préférence sur la base d'un indicateur VAD de la trame vocale.

**14.** Dispositif selon la revendication 13, dans lequel la fonction de coût est basée sur la multiplication de facteurs de pondération respectifs avec chacun des paramètres, à savoir le temps de mise en tampon de poids, la qualité de poids et le silence de poids.

**15.** Dispositif selon la revendication 14, dans lequel la fonction de coût est calculée par :

{paramètre de temps de mise en tampon . temps de mise en tampon de poids

+ paramètre de qualité . qualité de poids + paramètre de silence . silence de poids} /

{temps de mise en tampon de poids + qualité de poids + silence de poids},

et la trame dans le circuit tampon présentant la plus petite fonction de coût est mise au rebut par l'unité de mise au rebut.

**16.** Dispositif selon l'une quelconque des revendications précédentes, comprenant en outre des moyens permettant d'ajouter des informations de séquence de temps à une trame vocale devant être transférée ou routée, dans lequel les moyens sont conçus pour ajouter des informations comprenant le nombre de trames qui ont été mises au rebut dans le flux correspondant de trames vocales pour un utilisateur particulier.

**17.** Dispositif selon l'une quelconque des revendications précédentes, dans lequel l'unité de mise au rebut est en ourtre adaptée à mettre au rebut la trame vocale stockée dans le circuit tampon sur la base en outre de sa position relative dans une période de silence transmise par une pluralité de trames vocales d'un flux de trames vocales pour un utilisateur particulier, dans lequel une trame vocale au début de ladite période de silence est moins susceptible d'être mise au rebut qu'une trame vocale dans une instance ultérieure de ladite période de silence.

18. Procédé destiné à transférer ou à router des trames vocales dans un réseau de transport d'un système de communication mobile, le procédé comprenant les étapes de :

réception de trames vocales entrantes d'une pluralité d'utilisateurs du système de communication mobile, stockage des trames vocales entrantes de la pluralité d'utilisateurs du système de communication mobile dans un circuit tampon, et
mise au rebut d'une trame vocale des trames vocales stockées dans le circuit tampon sur la base du contenu de la trame vocale,
**caractérisé en ce que**
le contenu de la trame vocale comprend des informations concernant la qualité de ladite trame vocale indiquant si oui ou non la trame vocale a été reçue par erreur dans la transmission sens montant de l'interface hertzienne.

19. Procédé selon la revendication 18, dans lequel le procédé est réalisé par un nœud de transport du réseau de transport de système de communication mobile.

20. Procédé selon l'une quelconque des revendications précédentes 18 ou 19, dans lequel le procédé est réalisé par tous les, une pluralité des ou au moins trois nœuds de transport du réseau de transport de système de communication mobile.

Fig. 1

## Fig. 2

Radio Access Network (100)

Core Network (110)

Aggregation Network (120)

Backbone (130)

LTE (140)

(340) UE2 — (330) eNodeB

(320) Security GW — (310) MME — (300) SGW / PGW

(200) UE1 — (210) NodeB

Router — Router (220)

Router — Router

RNC (230)

Router — Router (240)

Router — Router

Security GW — MME — SGW / PGW

UMTS (150)

BSC (420)

(250) MSS / MGW — (260) IMS

GSM (160)

(400) MS3 — (410) BTS

TRAU (480)

EP 3 364 615 B1

22

Fig. 3

(400) Speech frames transmitted via the UMTS air interface (Uu) in uplink direction

(420) Speech frames transmitted via the UMTS Iub interface in uplink direction

# Fig. 4

(460) Speech frames transmitted via the LTE air interface (Uu) in downlink direction

(440) Speech frames transmitted via the LTE S1 interface in downlink direction

EP 3 364 615 B1

# Fig. 5

Fig. 6

**General parameters**

| | | | | VAD parameters | | FQI parameters | |
|---|---|---|---|---|---|---|---|
| WEIGHT_BUFFERING_TIME: | 0,1 | | | | | | |
| WEIGHT_VAD: | 0,3 | | | A: | 1 | C: | 2 |
| WEIGHT_FQI: | 0,6 | | | B: | 0 | D: | 0 |

**Speech frame related values**

| Speech frame: | 1 | 2 | 3 | 4 | 5 | 6 | 7 | 8 | 9 | 10 |
|---|---|---|---|---|---|---|---|---|---|---|
| In buffer since: | 0 ms | 20 ms | 40 ms | 60 ms | 60 ms | 80 ms | 80 ms | 80 ms | 80 ms | 100 ms |
| SCORE_BUFFERING_TIME: | 0 | 1 | 2 | 3 | 3 | 4 | 4 | 4 | 4 | 5 |
| Active speech: | no | no | yes | yes | no | no | yes | no | no | yes |
| SCORE_VAD: | 0 | 0 | 1 | 1 | 0 | 0 | 1 | 0 | 0 | 1 |
| FQI: | 1 | 1 | 0 | 0 | 0 | 1 | 0 | 1 | 0 | 0 |
| SCORE_FQI: | 2 | 2 | 0 | 0 | 0 | 2 | 0 | 2 | 0 | 0 |
| Cost function result: | 1,2 | 1,3 | 0,5 | 0,6 | 0,3 | 1,6 | 0,7 | 1,6 | 0,4 | 0,8 |

EP 3 364 615 B1

# Fig. 7

(600)
```
Set parameters A, B, C, D, and
weighting factors.
Define thresholds LOAD_THR1,
and LOAD_THR2.
```

(610)
```
Is the
current load >          no
LOAD_THR1?
```

*yes*

(620)
```
Mark speech frames
characterised by FQI = 0
and/or non-active speech
(VAD = 0).
```

(630)
```
Calculate cost function for
each marked speech frame.
```

(640)
```
Discard the speech frame of
minimum cost value out of the
buffered speech frames of all
users.
```

(650)
```
Is the
no          current load >
LOAD_THR2?
```

*yes*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080151921 A1
- US 20080255842 A1

- EP 1903557 A2


### Non-patent literature cited in the description

- Mandatory speech codec speech processing functions; Adaptive Multi-Rate (AMR) speech codec; Voice Activity Detector (VAD). *3GPP TS 26.094 V11.0.0,* 2012, http://www.3gpp.org
- Mandatory speech codec speech processing functions; Adaptive Multi-Rate (AMR) speech codec; Comfort noise aspects. *3GPP TS 26.092 V11.0.0,* 2012, http://www.3gpp.org
- Mandatory speech codec speech processing functions Adaptive Multi-Rate (AMR) speech codec; Source controlled rate operation. *3GPP TS 26.093 V11.0.0,* 2012, http://www.3gpp.org
- Mandatory speech CODEC speech processing functions; AMR speech CODEC; General description. *3GPP TS 26.071 V11.0.0,* 2012, http://www.3gpp.org

- Wired/Wireless Internet Communications. **F. BOAVIDA ; E. MONTEIRO ; S. MASCOLO ; Y. KOUCHERYAVY.** proceedings of 5th International Conference, WWIC 2007, Coimbra, Portugal. Springer, 2007
- Quality of Service (QoS) concept and architecture. *3GPP TS 23.107 V11.0.0,* 2012, http://www.3gpp.org
- Speech codec speech processing functions; Adaptive Multi-Rate - Wideband (AMR-WB) speech codec; Frame structure. *3GPP TS 26.201 V11.0.0,* 2012, http://www.3gpp.org
- Mandatory Speech Codec speech processing functions; Adaptive Multi-Rate (AMR) speech codec; Error concealment of lost frames. *3GPP TS 26.091 V11.0.0,* 2012, http://www.3gpp.org